# EUROPEAN PATENT SPECIFICATION

(11) **EP 0 585 786 B1**
(45) Date of publication and mention of the grant of the patent: **22.12.1999**
(21) Application number: 93113534.7
(22) Date of filing: 24.08.1993
(51) Int. Cl.: H01F 27/40, H01F 41/04

(54) **Process for preparing a flyback transformer**
Verfahren zum Herstellen einer Rücklauftransformator
Procédé de preparation d'un Transformateur de retour

(30) Priority: 26.08.1992 JP 22714292; 29.10.1992 JP 29060192
(43) Date of publication of application: 09.03.1994
(73) Proprietor: SANYO ELECTRIC CO., LTD., Moriguchi-shi, Osaka (JP)
(72) Inventor: Kurogi, Akio, Hirakata-shi, Osaka (JP); Okamoto, Hiroshi, Soraku-gun Kyoto (JP); Onishi, Hideo, Nara-shi Nara (JP); Akado, Yasushi, Tsuzuki-gun Kyoto (JP); Tsubotani, Katsuya, Shijonawate-shi Osaka (JP)
(74) Representative: Glawe, Delfs, Moll & Partner

(56) References cited:
- EP-A- 0 201 335
- PATENT ABSTRACTS OF JAPAN vol. 9, no. 147 (E-323)21 June 1985 & JP-A-60 028 773 (MATSUSHITA DENKI SANGYO) 13 February 1985
- PATENT ABSTRACTS OF JAPAN vol. 11, no. 4 (E-468)7 January 1987 & JP-A-61 179 513 (HITACHI LIGHTING) 12 August 1986
- PATENT ABSTRACTS OF JAPAN vol. 7, no. 243 (E-207)28 October 1983 & JP-A-58 132 915 (MATSUSHITA DENKI SANGYO) 8 August 1983

## Description

The present invention relates to a process for preparing a flyback transformer device for use in television receivers and various display devices, and more particularly to the structure of a flyback transformer device wherein leads of electronic components are fixedly connected by electric welding to terminal pieces provided upright on a coil bobbin.

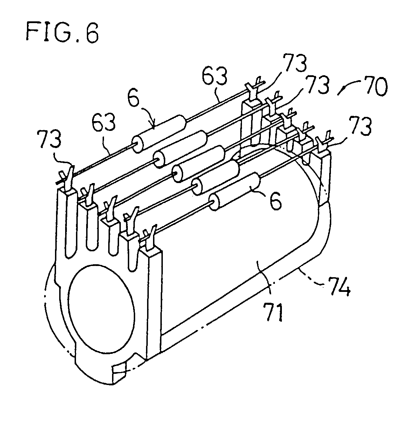

Flyback transformer devices 70 having coils provided in layers generally comprise, as shown in FIG. 6, a plurality of divided coils 74 wound around a coil bobbin 71, and pairs of terminal pieces 73 provided upright at opposite ends of the bobbin 71. A diode, resistor or like electronic component 6 is connected between each pair of opposed terminal pieces 73, 73.

Each of leads 63, 63 extending from opposite sides of the electronic component 6 is electrically fixedly connected to the terminal piece 73 conventionally by shaping the terminal piece 73 in a Y-form as illustrated, placing the outer end of the lead 63 on the Y-shaped portion of the terminal piece 73, crimping the Y-shaped portion to fix the lead 63 in this state and thereafter soldering the crimped portion by dipping (see, for example, Unexamined Japanese Utility Model Publication HEI 1-105383).

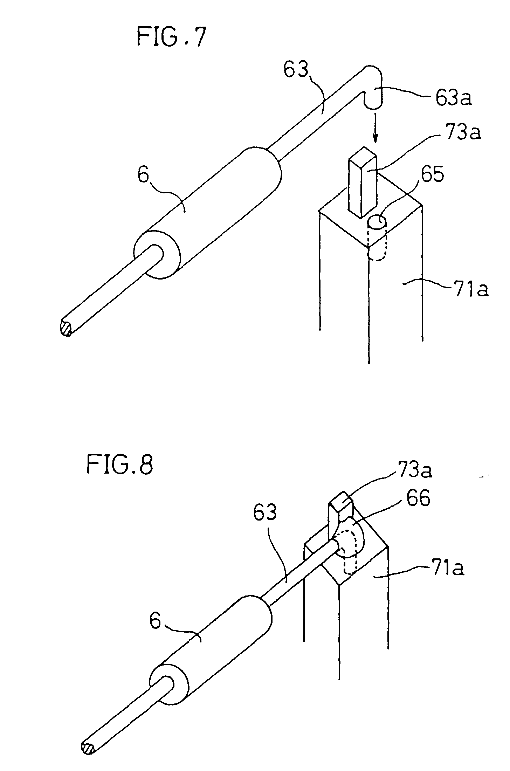

Another method of mounting electronic components on a coil bobbin has been proposed as shown in FIG. 7. A lead 63 is connected to a terminal piece 73a with a solder 66 as shown in.FIG. 8 by bending the outer end 63a of the lead 63 to an L-shape, fitting the lead end 63a in a cavity 65 in a post 71a of the coil bobbin at one side of the terminal piece 73a to preliminarily fix the lead 63 as held in contact with the terminal piece 73a and thereafter dipping the fixed portion in solder (Unexamined Japanese Patent Publication SHO 63-15668 and Examined Japanese Utility Model Publication hei 2-1171).

However, the conventional method of mounting electronic components with use of Y-shaped terminal pieces requires the work of fixing the lead by crimping the terminal piece and therefore has the problem of being complex and necessitating cumbersome work.

On the other hand, the method wherein cavities are formed in the coil bobbin not only requires a device for bending leads and a device for inserting the lead into the cavity but also makes the die for producing bobbins complex in configuration to result in an increased cost. Another problem is also encountered in that the coil bobbin becomes larger.

Patent Abstracts of Japan, vol. 7, no. 243 (E-207), 28.10.83 and JP-A-58 132 915 disclose a process for preparing a flyback transformer device wherein the leads of an electronic part are bent and attached to the terminals of a bobbin, before being welded thereto by ultrasonic welding.

Patent Abstracts of Japan, vol. 11, no. 4 (E-468), 07.11;87 and JP-A-61 179 513 disclose a process for preparing a coil device wherein, for avoiding defective welding between a terminal fixture and a coil terminal, the terminal strip is provided with a slot extending in the direction of the coil axis. Spot welding is performed with a welding upper electrode applied onto the slot and a raised piece of the terminal fixture engaging the terminal end of the coil.

An object of the present invention is to provide a process for preparing a flyback transformer device so as to overcome all the problems described above.

According to the invention, this object is achieved by a process for preparing a flyback transformer device which includes the steps of producing a coil bobbin having terminal pieces projecting outward from the coil bobbin, winding a coil conductor around the coil bobbin, twining an end portion of the wound coil conductor around one of the terminal pieces, fixing leads of an electronic component to two of the terminal pieces by spot welding, and soldering the twined portion of the coil conductor around the terminal piece by dipping.

After the coil conductor end portion has been preliminarily fixed to the terminal piece by the conductor twining step of the process, the solder dipping step ensures a mechanical and electrical connection between the coil conductor and the terminal piece.
FIGS. 1 (a), (b) and (c) are a plan view, side elevation and front view, respectively, showing a coil bobbin in a flyback transformer device of the invention;
FIGS. 2 (a), (b) and (c) are a plan view, side elevation and front view, respectively, showing a high-tension coil as provided on the coil bobbin;
FIGS. 3 (a), (b) and (c) are a plan view, side elevation and front view, respectively, showing a plurality of electronic components as welded to the coil bobbin.
FIG. 4 is a diagram showing a spot welding step;
FIG. 5 is an enlarged side elevation showing a terminal portion as soldered by dipping;
FIG. 6 is a perspective view showing a conventional flyback transformer device;
FIG. 7 is a view of a lead preliminarily fixing step in a conventional method of producing the flyback transformer device; and
FIG. 8 is a view showing a soldering step of the method.

Embodiments of the present invention will be described in detail with reference to the drawings.

### (Construction of Flyback Transformer Device)

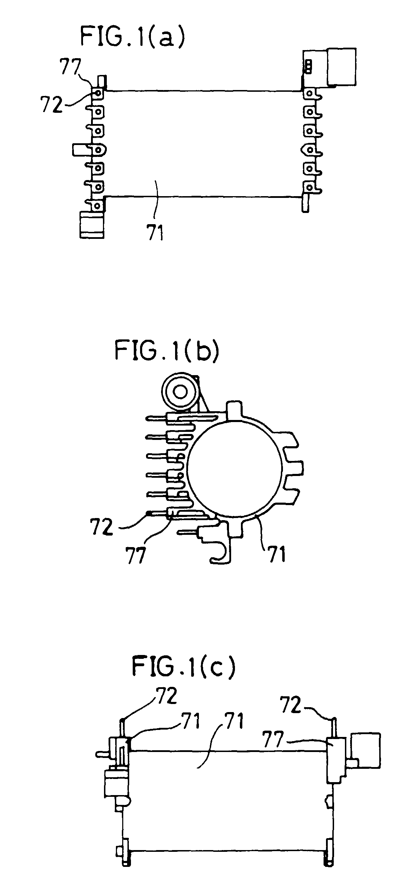

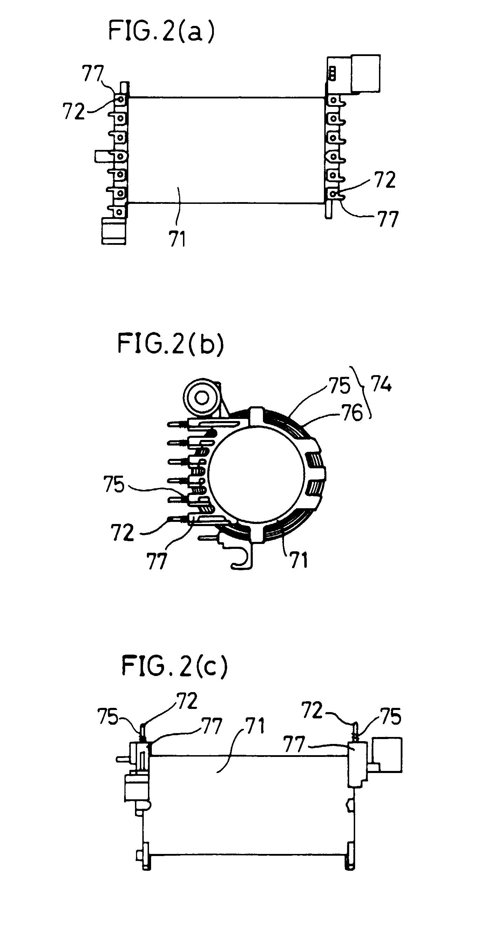

FIGS. 1 (a), (b) and (c) show the appearance of a coil bobbin 71 for use in a flyback transformer device of the invention, and FIGS. 2 (a), (b) and (c) show a high-tension coil 74 as provided around the coil bobbin 71 of FIG. 1. As illustrated, the coil 74 comprises a coil conductor 75 as wound in layers with an insulating film 76 interposed between the layers. With the present embodiment, the high-tension coil is formed in six layers. Opposite ends of conductor portion of each layer are preliminarily fixed as twined around terminal pieces 72.

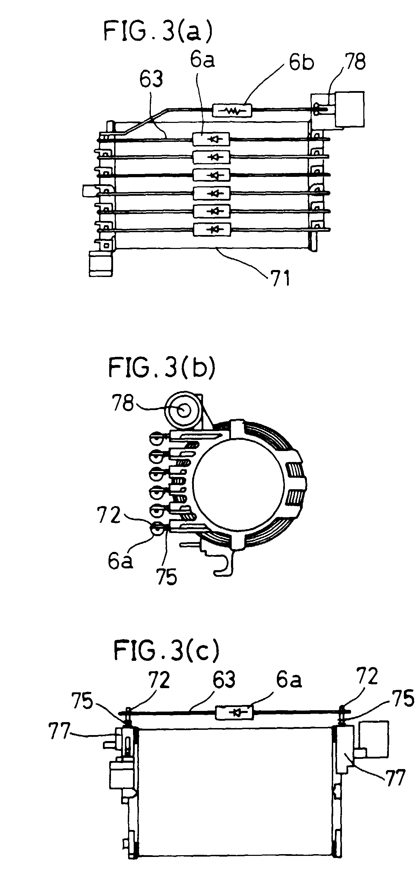

FIGS. 3 (a), (b) and (c) show six diodes 6a and one limiting resistor 6b as mounted on the coil bobbin 71 having the high-tension coil formed therearound. With reference to these drawings, each diode 6a extends between and is electrically welded to a pair of terminal pieces 72, 72 corresponding thereto, while the limiting resistor 6b has a lead electrically welded to another terminal piece 72 and a lead soldered to an eyelet terminal 78.

### (Process for Preparing Flyback Transformer Device)

With reference first to FIGS. 1 (a) to (c), metal terminal pieces 72 are implanted upright on posts 77 of a coil bobbin 71. Used as the terminal piece 72 in the present embodiment is a brass core wire which is plated with tin.

With reference to FIGS. 2 (a) to (c), a coil conductor 75 is next wound in six layers around the bobbin 71 with an insulating film 76 interposed between the layers. At this time, opposite ends of the conductor portion 75 of each layer are preliminarily fixed as twined around terminal pieces 72. The number of layers in the high-tension coil differs depending on the type of coil.

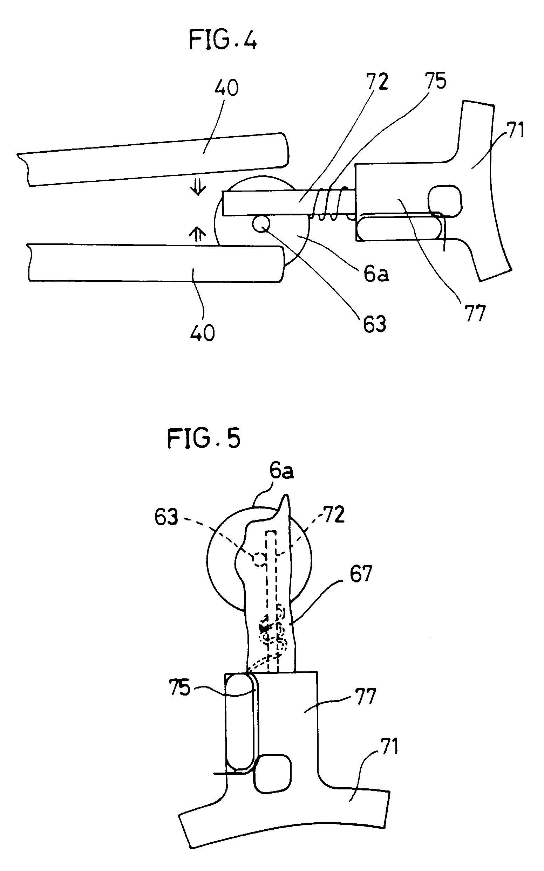

As shown in FIGS. 3 (a), (b) and (c), diodes 6a and a limiting resistor 6b are mounted. With reference to FIG. 4, the outer end of lead 63 of each diode 6a is held to the terminal piece 72 by being clamped between a pair of welding electrodes 40, 40, and a current of several milliamperes is passed between the electrodes to melt the surfaces of the terminal piece 72 and lead 63 and join them together by spot welding. The terminal piece 72 and the lead 63 of the diode 6a thus joined together by spot welding have a sufficient joint strength and are also electrically connected together. As already stated, one lead end of the limiting resistor 6b is spot-welded to the terminal piece 72 in the same manner as above, while the other lead end is preliminarily fixed to an eyelet terminal 78 as engaged therewith.

After the diodes 6a and the limiting resistor 6b have been mounted in place in this way, the spot welds between the terminal pieces 72 and the leads 63 of the diodes 6a, the coil conductor portions 75 twined around other terminal pieces 72 and the connection between the lead of the resistor 6b and the eyelet terminal 78 are dipped in a solder bath (not shown) at the same time for soldering, whereby the welded portions of the terminal pieces 72 and leads 63 and the conductor twined portions are covered with solder 67 as shown in FIG. 5. Although the coil conductor 75 is covered with an insulating coating, the coating is removed by the heat of solder when dipped in the solder bath, so that the conductor 75 and the terminal piece 72 are electrically connected together. The spot weld between the terminal piece 72 and the lead 63 of each diode 6a is further reinforced with the solder. The lead of the resistor 6b is connected to the eyelet terminal 78 electrically more reliably also by the solder.

Although the terminal piece 72 used in the present invention has a rectangular cross section, this is not limitative, but the section can be circular, or elliptical or otherwise shaped as desired.

In the case of the flyback transformer device described, the lead of the diode 6a can be fixedly connected to the terminal piece 72 easily by spot welding. This facilitates automation of the connecting procedure, further leading to the advantage of obviating the need, for example, to bend the diode lead to an L-form. Further with such a type of devices that coil bobbins of different sizes are used, the diode mounting step can be easily executed using a jig for cutting the leads of diodes to a suitable length immediately before mounting, so that the diodes need not be worked on in advance.

Furthermore, the coil conductor twining step preliminarily fixes the end of the conductor 75 to the terminal piece 72, the step of joining the lead 63 of the diode 6a to the terminal piece 72 by spot welding secures the diode 6a to the terminal piece 72, and the solder dipping step mechanically and electrically connects the coil conductor 75 to the terminal piece 72 simultaneously with establishment of a mechanical and electrical connection between the lead 63 of the diode 6a and the terminal piece 72. These steps are therefore advantageous in effecting a sequence of operations automatically.

## Claims

1. A process for preparing a flyback transformer device including the steps of producing a coil bobbin (71) having terminal pieces (72) projecting outward from the coil bobbin, winding a coil conductor (75) around the coil bobbin, twining an end portion of the wound coil conductor around one of the terminal pieces, fixing leads (63) of an electronic component (6a, 6b) to two of the terminal pieces (72) by spot welding, and soldering the twined portion of the coil conductor (75) around the terminal piece (72) by dipping.

2. A process as defined in claim 1, wherein the portion of the coil conductor (75) twined around the terminal piece (72) and the portions of the leads (63) welded to the terminal pieces (72) are soldered at the same time by dipping.

## Patentansprüche

1. Verfahren zum Herstellen einer Zeilenrücklauftrafo-Vorrichtung, welches die folgenden Schritte aufweist:
Erzeugen eines Spulenkörpers (71) mit Anschlußteilen (72) die aus dem Spulenkörper herausragen;
Aufwickeln eines Spulenleiters (75) um den Spulenkörper;
Verdrillen eines Endabschnitts des aufgewickelten Spulenleiters um einen der Anschlußteile;
Befestigen von Zuleitungsdrähten (63) eines elektronische: Bauteils (6a, 6b) an zwei der Anschlußteile (72) durch Punktschweißen; und
Löten des verdrillten Abschnitts des Spulenleiters (75) un den Anschlußteil (72) herum durch Eintauchen.

2. Verfahren nach Anspruch 1, dadurch gekennzeichnet, d der um den Anschlußteil (72) herum verdrillte Spulenleite (75) und die Abschnitte der an die Anschlußteile (72) geschweißten Zuleitungsdrähte (63) durch Eintauchen gleichzeitig gelötet werden.

## Revendications

1. Procédé pour fabriquer un dispositif transformateur retour, comprenant des étapes consistant à:
produire une armature de bobine (71) ayant des parties de borne (72) faisant saillie vers l'extérieur depuis ladite armature de bobine;
enrouler un conducteur hélicoïdal (75) autour de ladite armature de bobine;
torsader une partie d'extrémité dudit conducteur hélicoïde enroulé autour de l'une desdites parties de borne;
attacher des fils alimentateurs (63) d'un composant électronique (6a, 6b) à deux desdites parties de borne (72) er utilisant le soudage par points; et
souder ladite partie torsadée dudit conducteur hélicoïdal (75) autour de ladite partie de borne (72) par immersion.

2. Procédé selon la revendication 1, caractérisé en ce que ladite partie dudit conducteur hélicoïdal (75) torsadé autour de ladite partie d'extrémité (72) et les parties desdits fils alimentateurs (63) soudées auxdites parties c borne (72) sont brasées en même temps par immersion.
